# EUROPEAN PATENT SPECIFICATION

(11) **EP 3 517 252 B1**
(45) Date of publication and mention of the grant of the patent: **14.12.2022**
(21) Application number: 18153714.3
(22) Date of filing: 26.01.2018
(51) Int. Cl.: B25F 5/00

(54) **MOTION MONITORING DEVICE FOR HANDHELD TOOL**
BEWEGUNGSÜBERWACHUNGSVORRICHTUNG FÜR HANDWERKZEUG
DISPOSITIF DE SURVEILLANCE DE MOUVEMENT POUR OUTIL À MAIN

(43) Date of publication of application: 31.07.2019
(73) Proprietor: Techtronic Outdoor Products Technology Limited, Hamilton HM12 (BM)
(72) Inventor: Rickey, Todd Brandon, Victoria, 3149 (AU); Lee, Hei Man, Kwai Chung (HK)
(74) Representative: Novagraaf Group

(56) References cited:
- EP-A1- 3 162 479
- EP-A1- 3 170 597
- EP-A1- 3 192 614
- EP-A2- 2 679 348
- DE-A1-102011 089 343
- DE-A1-102015 200 056
- DE-A1-102016 102 753
- JP-A- 2010 094 757
- JP-A- 2011 067 885
- US-A1- 2007 084 613
- US-A1- 2014 313 045
- US-A1- 2016 175 920
- US-B1- 7 182 148

## Description

### TECHNICAL FIELD

The invention relates to a motion monitoring accessory for a hedge trimmer used for performing gardening works.

### BACKGROUND

Handheld tools can generally be classified into powered tools and non-powered tools, and they are used in various work operations to perform, for example, cutting, drilling, etc.

In some operations, it may be desirable to substantially maintain the orientation of the tool during operation. For example, a gardener may wish to maintain the orientation of a gardening tool such as trimmer during cutting and trimming of hedges and shrubs to ensure a consistent cut. An artist-gardener would desire accurate control of the orientation of the tool to perform delicate cutting and trimming tasks to ensure a smooth and aesthetic finish.

However, this may be a rather difficult task. First, it would be difficult for the operator to accurately control hand movement and hence the orientation of the tool solely based on judgment by naked eye. Also, often times, the ground on which the operator is standing and on which the object to be cut is arranged is uneven or even sloped. This adds further complication to the task.

There is a need to provide a means to assist operators, in particular less experienced operators, of handheld tools in substantially maintaining the orientation of the tool during operation, especially on uneven or sloped grounds. It is preferable that such means is simple and intuitive, and which allows the operator to readily tell whether the tool is disorientated, preferably with information on the angle and extent of disorientation.

DE102011089343 relates to a handheld power tool which has a sensor detecting acceleration of the tool and an evaluation and/or controlling unit, and another sensor detecting spatial alignment of the tool, where the sensors are formed by a micro-electromechanical system. According to the abstract of this document the sensors are formed in a single-piece and the sensors form a sensing unit. An output unit comprises an optical, acoustic and/or haptic output element, and an attenuator attenuates the sensors. The evaluation and/or controlling unit includes a storage element for storing the spatial alignment.

EP3170597 relates to an alignment aid for a hand-held machine tool. According to the abstract of this document the alignment aid has a memory in which a target orientation of the hand tool with respect to a surface to be machined and a reference orientation of a reference surface of the hand tool with the target orientation are stored. With input means for initializing the alignment aid equates a current orientation with the reference orientation in response to actuation. A rotary motion sensor detects a rotary motion of the alignment aid. An evaluation unit determines a current orientation with respect to the surface to be machine based on the detected rotational movements and determines a deviation of the current orientation from the target orientation. A display shows the use or deviation of the current orientation from the target orientation.

EP2679348 relates to a level, plumb and perpendicularity indicator for a power tool. According to the abstract of this document the power tool includes a housing, an output shaft having a tool axis, and a motion sensor that senses motion of the tool housing. A control circuit receives an input signal from the motion sensor, to make a first determination, based on the input signal, whether the tool is being operated in a horizontal mode or a vertical mode. The control circuit makes a second determination, based on the input signal, whether the tool axis is substantially level when the tool is being operated in the horizontal mode or the tool axis is substantially plumb when the tool is being operated in the vertical mode. An indicator receives an output signal from the control circuit that causes the indicator to indicate whether the tool axis is level when being operated in the horizontal mode or plumb when being operated in the vertical mode.

US7182148 relates to a tool with motion and orientation indicators. The tool has a housing, a display unit attached to the housing, and a motion detection unit operably coupled to the housing and to the display unit, wherein the motion detection unit is configured to detect linear and rotational motion of the housing, to generate a first display signal indicative of the linear motion of the housing and to provide the first display signal to the display unit, and to generate a second display signal indicative of the rotational motion of the housing and to provide the second display signal to the display unit.

EP3162479 relates to a position feedback control method and power tool. According to the abstract of this document the power tool may include a first position sensor, a second position sensor, a third position sensor, and a controller. The first, second, and third position sensors may each generate a signal indicative of the distance between the respective position sensor and a work piece. The controller may determine one or more angles of the power tool with respect to the work piece based on the first, second, and third signal and present an indication as to whether the one or more angles are within a predetermined range. The controller may further obtain a depth measurement based on the first signal, second signal, and third signal and generate, based on the obtained depth measurement, one or more control signals that control operation of the power tool.

DE102015200056 relates to a tool and method for treating a work piece with a tool element of a tool. According to the abstract of this document the tool comprises a tool element for treating a work piece, a detection device for detecting a position of the tool in space and/or a position of the tool relative to a surface of the work piece to be treated, a control device for evaluating the position detected by the detection device relative to the predetermined position, and a display device for displaying an evaluation result of the control device as a spirit level.

EP3192614 relates to a system for enhancing operation of tools. According to the abstract of this document a system is provided for facilitating power tool operation of positioning which includes a power tool, remote detectable device attached to the power tool, a computing device for communicating with the power tool to detect the location of the power tool relative to the computing device by detecting the location remote detectable device, and a display for displaying or inputting information into the computing device. The computing device is able to receive and store CAD dimensional data representing a layout of a work area and specific locations in that area where work needs to be done. A computing device directs a positioning of the tool at a work site by comparing the position of the tool with the CAD layout position of a location where work needs to be done.

US2016/175920 relates to a tool and method for processing a work piece with a tool element of a tool. According to the abstract of this device the control device is configured to evaluate a rotation angle, which is detected by a detection device, and with which the tool is arranged in space, after a processing operation of the work piece has been carried out with the tool element. The control device is also configured to release the control of the tool in a manner dependent on whether the tool has been arranged in space with a predetermined rotation angle after the work piece has been processed.

DE102016102753 relates to a hand tool with position determination and method for determining the position of a hand tool. According to the abstract of this document the invention relates to a hand tool for machining a work piece, in particular a wall, a ceiling, a floor, a plate or a piece of furniture, with a housing, with an electrical drive means and with a tool holder for fixing a tool, the tool holder specifying a machining direction. The technical problem of enabling measurement and monitoring of the relative orientation of the machining directions of the surface to be machined for a hand tool is solved in that at least one sensor means is provided for determining a machining direction relative to the surface of the work piece. The invention also relates to a method for determining the position of a hand tool relative to a work piece.

US2007/084613 relates to a power tool anti-kickback system with rotational rate sensor. According to the abstract of this document a control system is provided for use in a power tool. The control system includes: a rotational rate sensor having a resonating mass and a controller electrically connected to the rotational rate sensor. The rotational rate sensor detects lateral displacement of the resonating mass and generates a signal indicative of the detected lateral displacement, such that the lateral displacement is directly proportional to a rotational speed at which the power tool rotates about an axis of the rotary shaft. Based on the generated signal, the controller initiates a protective operation to avoid further undesirable rotation of the power tool. The controller may opt to reduce the tool applied to the shaft where a non-zero value that enables the operator to regain control of the tool.

JP2011067885 relates to an attitude monitoring device of electric screwdriver, and electric screwdriver with attitude monitoring device. According to the abstract of this document, to avoid careless screwing operation with an electric screwdriver tilted exceeding allowance an attitude monitoring device of the electric screwdriver includes an acceleration sensor, a distance sensor, a one-chip microcomputer, a buzzer driving section, and a buzzer. The tilt and height of the electric screwdriver are measured by the acceleration sensor and the distance sensor. The one-chip microcomputer determines whether the tilt of the electric screwdriver is a tilt of a threshold angle or more, and whether the height of the electric screwdriver is a height approaching a screwing object within a threshold height. The buzzer driving section and the buzzer issue an alarm sound upon the fact that the electric screwdriver is tilted exceeding the threshold angle, and approaches the screwing object within the threshold height.

JP2010094757 relates to a power tool. The power tool is capable of being set at any angle and disabling operation at an unintentional angle by providing a function to automatically restrict operation when the angle is not the predetermined angle. The power tool includes an inclination sensor detecting inclination of a shaft of the tool, and a control device controlling not to operate the tool when the data output by the inclination sensor is outside the predetermined range. The tool operation is disabled if the tool does not match the axis of a bolt erected with a predetermined angle, for example.

US2014/313045A1 shows a motion sensor for handheld tools.

### SUMMARY OF THE INVENTION

It is an object of the invention to address the above needs, to overcome or substantially ameliorate the above disadvantages or, more generally, to provide an improved hedge trimmer, according to claim 1.

According to claim 1, in a hedge trimmer is provided a motion monitoring device for a handheld tool, comprising: a motion sensor arranged to detect orientation of the handheld tool; and a processor arranged to process the detected orientation to determine whether the orientation of the handheld tool is out of a predetermined tilting range. The predetermined tilting range may be defined by one or more angular thresholds. The predetermined tilting range may be, for example, , ±15°, ±10°, or ±5° from predetermined reference orientation.

The predetermined tilting range can be any one of, preferably two or all of: predetermined pitch range, predetermined row range, and predetermined yaw range. The pitch, row, and yaw axes are orthogonal with each other.

The hedge trimmer may further include an indicator arranged to provide an indication based on the determination by the processor. The indicator may include one or more of: a visual indicator, a tactile indicator, and an audible indicator.

Preferably, the indicator comprises a visual indicator. The visual indicator may include a display, such as LED/OLED display. The display can be touch-sensitive for receiving input.

Preferably, the display comprises a tilt status indication portion arranged to provide: a first indication when the handheld tool is determined to be within the predetermined tilting range; and a second indication different from the first indication when the handheld tool is determined to be out of the predetermined tilting range. The first and second indication may for example be provided by: different colors of lights, presence and absence of lights, continuous and flashing lights.

Preferably, the display comprises or further comprises a plurality of tilt direction indication portions arranged to provide respective indication to indicate respective direction of tilt of the handheld tool. The plurality of tilt direction indication portions may be arranged to be activated only when the handheld tool is determined to be out of the predetermined tilting range.

The number of tilt direction indication portions is preferably at least 4, more preferably at least 8. The tilt direction indication portions preferably form a substantially continuous loop. The loop can be generally circular, rectangular, squared, etc.

Preferably, each tilt direction indication portion comprises a first segment arranged to be activated when the handheld tool is determined to exceed the predetermined tilting range by a first amount; and a second segment arranged to be activated when the first segment is activated and the handheld tool is determined to exceed the predetermined tilting range by a second amount larger than the first amount, for indication of the extent of tilting. In one example, the first segment may be an inner segment and the outer segment may be an outer segment, relative to the boundary of the display. In another example, the first segment is the outer segment and the second segment in the inner segment. Activation may involve lighting up the respective segments and/or changing color of the segments.

The hedge trimmer may further include input means for adjusting or calibrating the predetermined tilting range. The input means may be in the form of a switch, button, slide, dial, roller, touch-sensitive screen, etc.

The motion sensor can be any of a gyroscope, an accelerometer, and an IMU sensor.

The hedge trimmmer may further include a communication module, preferable a wireless communication module, arranged for communicating information and data with (to and from) an external electronic device such as a mobile phone, tablet, and a computer. The wireless communication module can communicate with the external electronic device using any of the following communication links: Bluetooth, ZigBee, LTE, NFC, LTE, Wi-Fi, RFID, etc. An application may be installed on the external electronic device to facilitate the communication and user interaction. The information and data that can be communicated includes at least one of: commands for controlling operation of the motion monitoring device; commands for adjusting settings of the motion monitoring device; and determination results obtained by the motion monitoring device.

The hedge trimmer according to claim 1 includes also a connection interface arranged for connection with the handheld power tool for communication of power and/or data. The connection interface may be contact type or non-contact type. The motion monitoring device may be powered by the power source of the handheld power tool. The data that can be communicated includes determination result obtained by the processor.

In another example there is provided a handheld tool arranged to be operably connected with the motion monitoring device of the first aspect. The connection between the motion monitoring device and the handheld tool includes mechanical connection (during operation), and may also include electrical connection to enable data and/or power communication.

The handheld tool may include a receptacle or port adjacent the handle for receiving the motion monitoring device. A cover may be provided to close off the receptacle or port.

The handheld tool is preferably a handheld power tool, in particular one that is used for gardening. The handheld power tool may be operated by DC (battery pack) or AC (mains), and may include motor (e.g., brushless motor) driving a cutting mechanism for performing gardening work. Examples of the handheld power tool include hedge trimmer, chain saw, string trimmer, blower, blower-vac, etc.

In another example there is provided the handheld tool of the second aspect operably connected with the motion monitoring device of the first aspect.

In another example not according to the invention, there is provided a system comprising: a handheld tool of the second aspect; a motion monitoring device of the first aspect; an external electronic device operably connected with the motion monitoring device. The external electronic device may be a mobile phone, tablet, computer, etc. Preferably, the external electronic device is operable to be connected with a server such as a cloud computing server.

### BRIEF DESCRIPTION OF THE DRAWINGS

Embodiments of the invention will now be described, by way of example, with reference to the accompanying drawings in which:
Figure 1A is a schematic diagram of a motion monitoring device in one embodiment of the invention;
Figure 1B is a functional block diagram of the motion monitoring device of Figure 1A;
Figure 2A is a schematic diagram illustrating connection of the motion monitoring device of Figure 1 with an exemplary handheld tool (in the form of hedge trimmer);
Figure 2B is a schematic diagram showing the motion monitoring device connected with the handheld tool in Figure 2A;
Figure 3 is a schematic diagram showing a display of a motion monitoring device in one embodiment of the invention;
Figure 4A is a schematic diagram showing operation of a display of a motion monitoring device in one embodiment of the invention when the handheld tool is determined to be within a predetermined tilting range;
Figure 4B is a schematic diagram showing operation of the display of Figure 4A when the handheld tool is determined to exceed a predetermined pitch by a small extent;
Figure 4C is a schematic diagram showing operation of the display of Figure 4A when the handheld tool is determined to exceed a predetermined pitch and a predetermined roll by a small extent;
Figure 4D is a schematic diagram showing operation of the display of Figure 4A when the handheld tool is determined to exceed a predetermined pitch and a predetermined roll by a large extent;
Figure 5A is a schematic diagram showing operation of a display of a motion monitoring device in one embodiment of the invention when the handheld tool is determined to be within a predetermined tilting range;
Figure 5B is a schematic diagram showing operation of the display of Figure 5A when the handheld tool is determined to exceed a predetermined pitch by a small extent;
Figure 5C is a schematic diagram showing operation of the display of Figure 5A when the handheld tool is determined to exceed a predetermined pitch by a large extent and a predetermined roll by a small extent; and
Figure 6 is a schematic diagram of a system including a motion monitoring device mounted to a handheld tool (in the form of hedge trimmer) operably connected with an external electronic device and server in one embodiment of the invention.

### DETAILED DESCRIPTION OF THE PREFERRED EMBODIMENT

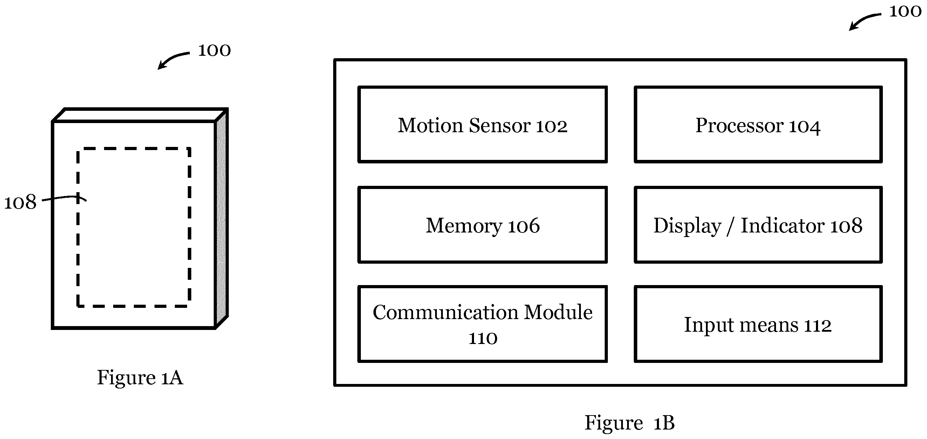

Figures 1A and 1B shows a motion monitoring device 100 for a handheld tool in one embodiment of the invention. The device 100 includes a motion sensor 102 arranged to detect orientation of the handheld tool, in particular the tilting of the tool. The motion sensor 102 includes a gyroscope, an accelerometer, or an IMU sensor. The motion sensor 102 preferably can determine orientation in at least two angular degrees of freedom.

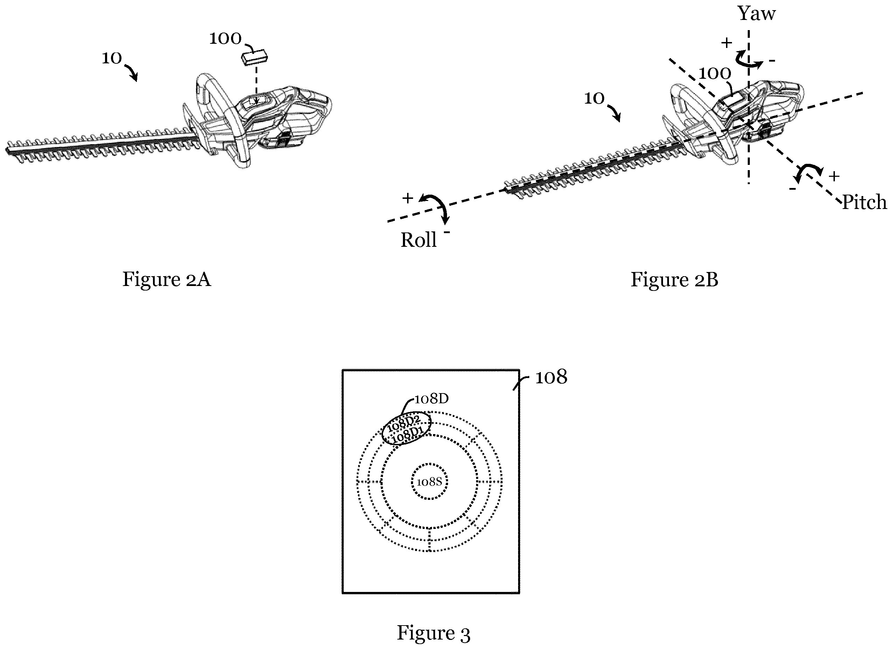

The device 100 also includes a processor 104 operably connected with the motion sensor 102, for receiving the detected orientation from the motion sensor 102. The processor 104 is process the information received from the motion sensor 102 to determine whether the orientation of the handheld tool is out of a predetermined tilting range. The predetermined tilting range may be defined by one or more angular thresholds, and may be adjustable. The predetermined tilting range can be a predetermined pitch range, a predetermined row range, and a predetermined yaw range, or any of their combination, as illustrated in Figure 2B. The processor 104 may be implemented using one or more of: MCU, CPU, circuit elements such as logic gates, ICs, etc., and it is further operable to control operation of the other modules in the device 100.

In the present embodiment, a memory module 108 is arranged in the device 100 for storing program codes and instructions for operating the device 100. Information from the motion sensor 102 and processing result from the processor 104 can also be stored in the memory module 106. The memory module 106 may include a volatile memory unit (such as RAM), a non-volatile unit (such as ROM, EPROM, EEPROM and flash memory), or both.

The device 100 preferably also includes an indicator arranged to provide an indication based on the determination by the processor 104 during operation. The indicator may include visual indicator, audible indicator, tactile indicator, or any of their combination. Visual indicators may be formed by LEDs, display, etc. In the present embodiment, the indicator includes a display 108. The display 108 may be an OLED display, a LED display, or a LCD display, and it may be touch-sensitive for receiving user input. In some embodiments, the device 100 may alternatively or additionally include indicators in the form of LEDs.

In the present embodiment, a communication module 110, preferably a wireless communication module, is arranged in the device 100 for communicating information and data with (to and from) an external electronic device such as a mobile phone, tablet, and a computer that is preferably installed with an application to facilitate user control. The wireless communication module can communicate with the external electronic device using any of the following wireless communication links: Bluetooth, ZigBee, LTE, NFC, LTE, Wi-Fi, RFID, etc. Through the communication module 110, commands for controlling operation and adjusting settings of the device 100 can be transmitted from the external electronic device to the device 100 and information relating to the determination results can be transmitted from the device 100 to the external electronic device.

In the present embodiment, the device 100 also includes input means 112 arranged to receive input from the user. The input means 112 may include any number of buttons, switches, buttons, slides, dials, rollers, or may be a touch-sensitive display integrated with the indicator 108. Through the input means 112, the user may turn on or off the device 100, perform calibration of the device 100 to adjust the predetermined tilting range (e.g., set reference), etc. This allows users to set reference as desired, and is useful for handling hedges on a sloped ground. In one example, the user holds the tool with the device 100 at the desired angular orientation, and then actuates the input means 112 to record the desired angular orientation as reference. In another example, the user holds the tool with the device 100 at the threshold angular orientation, and actuates the input means 112 to record the angular tolerance.

Preferably, a connection interface (not shown) is arranged for connection of the device 100 with the handheld power tool for communication of power and/or data. The connection interface may be contact-type, including, e.g., electrodes or terminals, or may be non-contact-type, including, e.g., coils or antenna. The connection interface may only provide power communication, only provide data communication, or provide both, through wired or wireless means. In one embodiment, the device 100, preferably without its own power source, is powered by the power source of the handheld power tool through the connection interface. In one embodiment, information, commands, and data, such as determination result obtained by the processor 104 and/or information obtained by the motion sensor 102, can be communicated to the processor of the handheld power tool for processing. In some embodiments, the device 100 may be connected with other display means on the tool itself, to use it to indicate the tilt status (and extent in some embodiments).

Optionally, a power source (not shown) may be arranged in the device 100 for powering the various modules described above. The power source may include one or more battery cells. The power source can be a rechargeable power source that may be recharged through wired means such as charging port provided on the device 100 or wirelessly through induction coils provided in the device 100.

Figures 1A and 1B show the device 100 in a stand-alone form, detachably connectable with the tool. However, in another embodiment, the device 100 can be integrated with and nondetachable from the handheld tool.

It should be noted that all modules in Figures 1A and 1B are operably connected with each other, directly or indirectly. Also, in some embodiments the motion monitoring device 100 can include more or less modules than that as shown in Figures 1A and 1B. Also, one or more of the modules illustrated may be combined or further divided for separate implementation. In one embodiment, the device 100 lacks an input means 112, and the calibration (set reference) is conducted using the trigger on the tool, to which the device is in data communication. For example, the calibration process can be performed upon actuation of the trigger on the tool or upon actuation of the trigger in a specific sequence or scheme.

Figures 2A and 2B show the motion monitoring device 100 arranged in a handheld tool in the form of a hedge trimmer 10. The hedge trimmer 10 includes a receptacle or port adjacent the handle for receiving the device 100. Although not shown, an openable cover (pivotable, removable, etc.) may be provided to close the receptacle or port on the trimmer 10, to prevent entering of dust and moisture into the receptacle or port. The connection between the motion monitoring device 100 and the trimmer 10 during operation can be purely mechanical, but preferably it also includes electrical connection to enable data and/or power communication between the device 100 and the trimmer 10. Figure 2B illustrates the mutually perpendicular axes defined for roll, yaw, and pitch of the tool.

Figure 3 shows an implementation of the display 108 of Figure 1 in one embodiment of the invention. As shown in Figure 3, the display 108 includes a tilt status indication portion 108S arranged to provide indication as to whether the handheld tool is determined to be out of the predetermined tilting range. In this example, the tilt status indication portion 108S is generally circular and centrally arranged. However, in other embodiments, the tilt status indication portion 108S can be of different shape and arranged at different position, for example at the corner of the display. The tilt status indication portion 108S is arranged to provide a first indication when the handheld tool is determined to be within the predetermined tilting range and a second indication different from the first indication when the handheld tool is determined to be out of the predetermined tilting range. In one example, the first indication is a first color of light (e.g., green) and the second indication is a second color of light (e.g., red). In another example, the first indication is absence of light and the second indication is presence of light. In yet another example, the first indication is a continuous light and the second indication is a flashing/blinking light.

Preferably, the display 108 also includes tilt direction indication portions 108D arranged to provide respective indication to indicate respective direction of tilt of the handheld tool. The number of tilt direction indication portions 108D is at least 4, and is 8 in the present example. The tilt direction indication portion 108D is arranged to form a substantially continuous loop, optionally with small gaps between adjacent portions 108D. The loop can be generally circular, rectangular, squared, etc. Preferably, the tilt direction indication portions 108D are activated only when the handheld tool is determined to be out of the predetermined tilting range, i.e., only when the tilt status indication portion 108S provides a second indication. Adjacent tilt direction indication portions 108D may be simultaneously activated to indicate that the handheld tool is determined to be out of a respective predetermined tilting range for two or more angular orientations.

In the present embodiment, each tilt direction indication portion 108D comprises an inner segment 108D1 and an outer segment 108D2 to indicate of the extent of tilting. In one example, the inner segment 108D1 may be activated when the handheld tool is determined to exceed the predetermined tilting range by a first amount, and the outer segment 108D2 may be activated when the inner segment 108D1 is activated and the handheld tool is determined to exceed the predetermined tilting range by a second amount larger than the first amount. In another example, the function of the inner segment 108D1 and the outer segment 108D2 may be swapped. Activation of the respective tilt direction indication portion 108D may involve lighting up the segments, changing color of the segments, changing blinking frequency of the segments, etc. In one example, the predetermined roll range is ±5°from reference, the first amount is o°, and the second amount is 5°. When the handheld tool is determined to be at -8 ° roll from reference, then the respective inner segment 108D1 is activated; when the handheld tool is determined to be at -12° roll from reference, then both inner and outer segments 108D1, 108D2 are activated. The display 108 in this embodiment is simple yet informative. In operation, the user simply can simply glance at the display 108 to readily determine how the tool is tilted and the extent of tilt, and therefore can quickly recover the proper orientation of the tool.

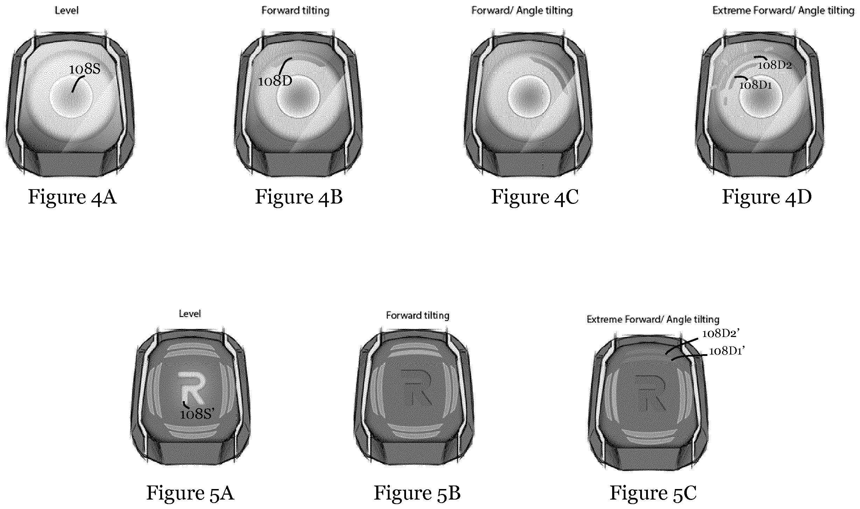

Figures 4A to 4D show exemplary displays of a motion monitoring device in one embodiment of the invention (such as device 100). In Figure 4A, the handheld tool is determined to be within a predetermined tilting range and a green light is shown on the tilt status indication portion 108S. In Figure 4B, the handheld tool is determined to be tilted downwardly (negative pitch) by a small extent (e.g., exceeds the predetermined tilting range by a first amount), and an orange light is shown on the tilt status indication portion 108S while the tilt direction indication portions 108D at the top part of the display is lit up in orange. In Figure 4C, the handheld tool is determined to be tilted both downwardly (negative pitch) and to the right (positive roll) by a small extent (e.g., both exceeds the predetermined tilting range by respective first amount), and an orange light is shown on the tilt status indication portion 108S while the tilt direction indication portions 108D at the top-right part of the display is lit up in orange. In Figure 4D, the handheld tool is determined to be tilted both downwardly (negative pitch) and to the left (positive roll) by a large extent (e.g., both exceeds the predetermined tilting range by respective second amount larger than the first amount), and an orange light is shown on the tilt status indication portion 108S while both segments 108D1, 108D2 of the tilt direction indication portions 108D at the top-left part of the display is lit up in orange.

Figures 5A to 5C show exemplary displays of another motion monitoring device in one embodiment of the invention. In this display, the tilt status indication portion 108S' is the form of a logo, and the tilt direction indication portions 108D' form a generally rectangular loop with gaps between adjacent portions 108D'.

In Figure 5A, the handheld tool is determined to be within a predetermined tilting range and a green light is shown on the tilt status indication portion 108S'. In Figure 5B, the handheld tool is determined to be tilted downwardly (negative pitch) by a small extent (e.g., exceeds the predetermined tilting range by a first amount), and the tilt status indication portion 108S is off while the inner tilt direction indication portion 108D1' at the top part of the display is lit up in orange. In Figure 4C, the handheld tool is determined to be tilted downwardly (negative pitch) by a large extent (e.g., exceeds the predetermined tilting range by a second amount larger than the first amount), and to the left (positive roll) by a small extent (e.g., exceeds the predetermined tilting range by a first amount), and tilt status indication portion 108S is off while the inner and outer tilt direction indication portions 108D1', 108D2' at the top part of the display are lit up in red and the inner tilt direction indication portion 108D1' on the left side of the display is lit up in orange.

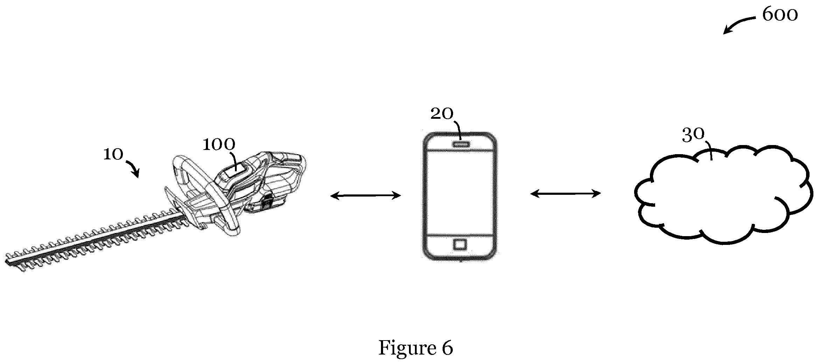

Figure 6 is a system 600 including a motion monitoring device 100 mounted to a handheld tool (hedge trimmer 10) and operably connected with an external electronic device 20, and a server 30 in one embodiment of the invention. The external electronic device 20 as shown in a mobile phone, but it can be any computer, tablet, etc. The server 30 is preferably a cloud computing server.

In the present embodiment, tilt information determined by the device 100 may be sent to the processor in the tool 10 for processing during operation. The tilt information can also be sent to the external electronic device 20 using the wireless communication module, and optionally a server 30, for analysis and storage. The external electronic device 20 may be installed with a dedicated application for facilitating user interaction with the device 100. In one embodiment, the user may also use the interface provided by the application installed in the external electronic device 20 to configure the device 100. For example, the user may define the reference tilt range in the external electronic device 20 and transmit it to the device 100 for operation. The user may also use the external electronic device 20 to transmit command to the tool 10, through the device 100 that is in data communication with the tool 10.

The server 30 and external electronic device 20 in Figure 6 may be implemented using one or more of the following exemplary information handling system operable connected with each other. The information handling system may have different configurations, and it generally comprises suitable components necessary to receive, store and execute appropriate computer instructions or codes. The main components of the information handling system are a processing unit and a memory unit. The processing unit is a processor such as a CPU, an MCU, etc. The memory unit may include a volatile memory unit (such as RAM), a non-volatile unit (such as ROM, EPROM, EEPROM and flash memory) or both. Optionally, the information handling system further includes one or more input devices such as a keyboard, a mouse, a stylus, a microphone, a tactile input device (e.g., touch sensitive screen) and a video input device (e.g., camera). The information handling system may further include one or more output devices such as one or more displays, speakers, disk drives, and printers. The displays may be a liquid crystal display, a light emitting display or any other suitable display that may or may not be touch sensitive. The information handling system may further include one or more disk drives which may encompass solid state drives, hard disk drives, optical drives and/or magnetic tape drives. A suitable operating system may be installed in the information handling system, e.g., on the disk drive or in the memory unit of the information handling system. The memory unit and the disk drive may be operated by the processing unit. The information handling system also preferably includes a communication module for establishing one or more communication links (not shown) with one or more other computing devices such as a server, personal computers, terminals, wireless or handheld computing devices. The communication module may be a modem, a Network Interface Card (NIC), an integrated network interface, a radio frequency transceiver, an optical port, an infrared port, a USB connection, or other interfaces. The communication links may be wired or wireless for communicating commands, instructions, information and/or data. Preferably, the processing unit, the memory unit, and optionally the input devices, the output devices, the communication module and the disk drives are connected with each other through a bus, a Peripheral Component Interconnect (PCI) such as PCI Express, a Universal Serial Bus (USB), and/or an optical bus structure. In one embodiment, some of these components may be connected through a network such as the Internet or a cloud computing network. The external electronic device 20 may be a mobile phone, a computer, or a tablet. The server 30 may be a cloud computing server that is preferably implemented by combination of software and hardware.

Although not required, the embodiments described with reference to the Figures can be implemented as an application programming interface (API) or as a series of libraries for use by a developer or can be included within another software application, such as a terminal or personal computer operating system or a portable computing device operating system. Generally, as program modules include routines, programs, objects, components and data files assisting in the performance of particular functions, the skilled person will understand that the functionality of the software application may be distributed across a number of routines, objects or components to achieve the same functionality desired herein.

It will also be appreciated that where the methods and systems of the invention are either wholly implemented by computing system or partly implemented by computing systems then any appropriate computing system architecture may be utilized. This will include stand-alone computers, network computers and dedicated hardware devices. Where the terms "computing system" and "computing device" are used, these terms are intended to cover any appropriate arrangement of computer hardware capable of implementing the function described.

It will be appreciated by persons skilled in the art that the embodiments presented are, in all respects, illustrative, not restrictive. Numerous variations and/or modifications may be made to the invention as shown in the described embodiments. For example, the motion monitoring device of the present invention can operate with different handheld tools, including power tools and non-powered tools. The handheld power tool may be operated by DC (battery pack) or AC (mains), and may include motor (e.g., brushless motor) driving a cutting mechanism for performing gardening work. Preferred examples of the handheld power tools operable with the device 100 include: hedge trimmer, chain saw, string trimmer, blower, and blower-vac.

## Claims

1. A hedge trimmer (10) removably and operably connected with a motion monitoring accessory (100), the motion monitoring accessory (100), comprising:
a motion sensor (102) arranged to detect orientation of the hedge trimmer (10) when the motion monitoring accessory (100) is mechanically connected to the hedge trimmer (10);
a processor (104) arranged to process the detected orientation to determine whether the orientation of the hedge trimmer (10) is out of a predetermined tilting range, the predetermined range including a predetermined roll range and a predetermined pitch range;
an indicator arranged to provide an indication based on the determination by the processor (104); and
a connection interface arranged for connection with the hedge trimmer (10) for communication of power and/or data.

2. The hedge trimmer (10) of claim 1, wherein the indicator comprises visual indicator.

3. The hedge trimmer (10) of claim 2, wherein the visual indicator comprises a display (108).

4. The hedge trimmer (10) of claim 3, wherein the display (108) comprises a tilt status indication portion (108S) arranged to provide:
a first indication when the hedge trimmer (10) is determined to be within the predetermined tilting range; and
a second indication different from the first indication when the hedge trimmer (10) is determined to be out of the predetermined tilting range.

5. The hedge trimmer (10) of claim 3 or 4, wherein the display (108) comprises a plurality of tilt direction indication portions (108D) arranged to provide respective indication to indicate respective direction of tilt of the hedge trimmer (10).

6. The hedge trimmer (10) of claim 5, wherein the plurality of tilt direction indication portions (108D) are arranged to be activated only when the hedge trimmer (10) is determined to be out of the predetermined tilting range.

7. The hedge trimmer (10)) of claim 6, comprising at least four tilt direction indication portions (108D) that form a substantially continuous loop.

8. The motion monitoring accessory (100) of claim 7, comprising at least eight tilt direction indication portions (108D) that form a substantially continuous loop.

9. The hedge trimmer (10) of claim 7 or 8, wherein each tilt direction indication portion (108D) comprises:
a first segment (108D1) arranged to be activated when the hedge trimmer (10) is determined to exceed the predetermined tilting range by a first amount; and
a second segment (108D2) arranged to be activated when the first segment (108D1) is activated and the hedge trimmer (10) is determined to exceed the predetermined tilting range by a second amount larger than the first amount, for indication of the extent of tilting.

10. The hedge trimmer (10) of any one of claims 1 to 9, further comprising input means (112) for adjusting or calibrating the predetermined tilting range.

11. The hedge trimmer (10) of any one of claims 1 to 10, wherein the motion sensor (102) comprises at least one of: a gyroscope, an accelerometer, and an IMU sensor.

12. The hedge trimmer (10) of any one of claims 1 to 11, further comprising a wireless communication module arranged for communicating information and data with an external electronic device (20).

13. The hedge trimmer (10) of claim 12, wherein the information and data includes at least one of:
commands for controlling operation of the motion monitoring accessory (100);
commands for adjusting settings of the motion monitoring accessory (100); and
determination results obtained by the motion monitoring accessory (100).

## Patentansprüche

1. Heckenschere (10), die mit einem Bewegungsüberwachungszubehör (100) entfernbar und wirkverbunden ist, das Bewegungsüberwachungszubehör (100) umfassend:
einen Bewegungssensor (102), der angeordnet ist, um eine Ausrichtung der Heckenschere (10) zu erfassen, wenn das Bewegungsüberwachungszubehör (100) mit der Heckenschere (10) mechanisch verbunden ist;
einen Prozessor (104), der angeordnet ist, um die erfasste Ausrichtung zu verarbeiten, um zu bestimmen, ob die Ausrichtung der Heckenschere (10) aus einem zuvor bestimmten Kippbereich stammt, wobei der zuvor bestimmte Bereich einen zuvor bestimmten Rollenbereich und einen zuvor bestimmten Neigungsbereich einschließt;
einen Indikator, der angeordnet ist, um eine Angabe basierend auf der Bestimmung durch den Prozessor (104) bereitzustellen; und
eine Verbindungsschnittstelle, die für die Verbindung mit der Heckenschere (10) für eine Kommunikation von Leistung und/oder Daten angeordnet ist.

2. Heckenschere (10) nach Anspruch 1, wobei der Indikator einen visuellen Indikator umfasst.

3. Heckenschere (10) nach Anspruch 2, wobei der visuelle Indikator eine Anzeige (108) umfasst.

4. Heckenschere (10) nach Anspruch 3, wobei die Anzeige (108) einen Kippstatusangabeabschnitt (108S) umfasst, der angeordnet ist, um bereitzustellen:
eine erste Angabe, wenn bestimmt ist, dass sich die Heckenschere (10) innerhalb des zuvor bestimmten Kippbereichs befindet; und
eine zweite Angabe, die sich von der ersten Angabe unterscheidet, wenn bestimmt ist, dass sich die Heckenschere (10) außerhalb des zuvor bestimmten Kippbereichs befindet.

5. Heckenschere (10) nach Anspruch 3 oder 4, wobei die Anzeige (108) eine Vielzahl von Kipprichtungsangabeabschnitten (108D) umfasst, die angeordnet sind, um die jeweilige Angabe bereitzustellen, um die jeweilige Kipprichtung der Heckenschere (10) anzugeben.

6. Heckenschere (10) nach Anspruch 5, wobei die Vielzahl von Kipprichtungsangabeabschnitten (108D) angeordnet sind, um nur aktiviert zu werden, wenn bestimmt ist, dass die Heckenschere (10) sich außerhalb des zuvor bestimmten Kippbereichs befindet.

7. Heckenschere (10) nach Anspruch 6, umfassend mindestens vier Kipprichtungsangabeabschnitte (108D), die eine im Wesentlichen kontinuierliche Schleife ausbilden.

8. Bewegungsüberwachungszubehör (100) nach Anspruch 7, umfassend mindestens acht Kipprichtungsangabeabschnitte (108D), die eine im Wesentlichen kontinuierliche Schleife ausbilden.

9. Heckenschere (10) nach Anspruch 7 oder 8, wobei jeder Kipprichtungsangabeabschnitt (108D) umfasst:
ein erstes Segment (108D1), das angeordnet ist, um aktiviert zu werden, wenn bestimmt ist, dass die Heckenschere (10) den zuvor bestimmten Kippbereich um eine erste Menge überschreitet; und
ein zweites Segment (108D2), das angeordnet ist, um aktiviert zu werden, wenn das erste Segment (108D1) aktiviert ist und bestimmt ist, dass die Heckenschere (10) den zuvor bestimmten Kippbereich um eine zweite Menge überschreitet, die größer als die erste Menge ist, für die Angabe des Grades des Kippens.

10. Heckenschere (10) nach einem der Ansprüche 1 bis 9, ferner umfassend ein Eingabemittel (112) zum Anpassen oder Kalibrieren des zuvor bestimmten Kippbereichs.

11. Heckenschere (10) nach einem der Ansprüche 1 bis 10, wobei der Bewegungssensor (102) mindestens eines umfasst von: einem Gyroskop, einem Beschleunigungsmesser und einem IMU-Sensor.

12. Heckenschere (10) nach einem der Ansprüche 1 bis 11, ferner umfassend ein Drahtloskommunikationsmodul, das zum Kommunizieren von Informationen und Daten mit einer externen elektronischen Vorrichtung (20) angeordnet ist.

13. Heckenschere (10) nach Anspruch 12, wobei die Informationen und Daten mindestens eines einschließen von:
Befehle zum Steuern eines Betriebs des Bewegungsüberwachungszubehörs (100);
Befehle zum Anpassen von Einstellungen des Bewegungsüberwachungszubehörs (100); und
Bestimmungsergebnisse, die durch das Bewegungsüberwachungszubehör (100) erhalten werden.

## Revendications

1. Taille-haie (10) relié de manière amovible et fonctionnelle à un accessoire de surveillance de mouvement (100), l'accessoire de surveillance de mouvement (100) comprenant :
un capteur de mouvement (102) agencé pour détecter l'orientation du taille-haie (10) lorsque l'accessoire de surveillance de mouvement (100) est relié mécaniquement au taille-haie (10) ;
un processeur (104) agencé pour traiter l'orientation détectée pour déterminer si l'orientation du taille-haie (10) est hors d'une plage d'inclinaison prédéterminée, la plage prédéterminée incluant une plage de roulis prédéterminée et une plage de pas prédéterminée ;
un indicateur agencé pour fournir une indication sur la base de la détermination par le processeur (104) ; et
une interface de connexion agencée pour une connexion avec le taille-haie (10) pour la communication de puissance et/ou de données.

2. Taille-haie (10) selon la revendication 1, dans lequel l'indicateur comprend un indicateur visuel.

3. Taille-haie (10) selon la revendication 2, dans lequel l'indicateur visuel comprend un affichage (108).

4. Taille-haie (10) selon la revendication 3, dans lequel l'affichage (108) comprend une partie d'indication d'état d'inclinaison (108S) agencée pour fournir :
une première indication lorsque le taille-haie (10) est déterminé comme étant dans la plage d'inclinaison prédéterminée ; et
une seconde indication différente de la première indication lorsque le taille-haie (10) est déterminé comme étant hors de la plage d'inclinaison prédéterminée.

5. Taille-haie (10) selon la revendication 3 ou 4, dans lequel l'affichage (108) comprend une pluralité de parties d'indication de direction d'inclinaison (108D) agencées pour fournir une indication respective pour indiquer la direction respective d'inclinaison du taille-haie (10).

6. Taille-haie (10) selon la revendication 5, dans lequel la pluralité de parties d'indication de direction d'inclinaison (108D) sont agencées pour être activées uniquement lorsque le taille-haie (10) est déterminé comme étant hors de la plage d'inclinaison prédéterminée.

7. Taille-haie (10) selon la revendication 6, comprenant au moins quatre parties d'indication de direction d'inclinaison (108D) qui forment une boucle sensiblement continue.

8. Accessoire de surveillance de mouvement (100) selon la revendication 7, comprenant au moins huit parties d'indication de direction d'inclinaison (108D) qui forment une boucle sensiblement continue.

9. Taille-haie (10) selon la revendication 7 ou 8, dans lequel chaque partie d'indication de direction d'inclinaison (108D) comprend :
un premier segment (108D1) agencé pour être activé lorsque le taille-haie (10) est déterminé pour dépasser la plage d'inclinaison prédéterminée d'une première quantité ; et
un second segment (108D2) agencé pour être activé lorsque le premier segment (108D1) est activé et que le taille-haie (10) est déterminé pour dépasser la plage d'inclinaison prédéterminée d'une seconde quantité supérieure à la première quantité, pour indication de l'étendue d'inclinaison.

10. Taille-haie (10) selon l'une quelconque des revendications 1 à 9, comprenant en outre un moyen d'entrée (112) pour régler ou étalonner la plage d'inclinaison prédéterminée.

11. Taille-haie (10) selon l'une quelconque des revendications 1 à 10, dans lequel le capteur de mouvement (102) comprend au moins l'un parmi : un gyroscope, un accéléromètre et un capteur d'IMU.

12. Taille-haie (10) selon l'une quelconque des revendications 1 à 11, comprenant en outre un module de communication sans fil agencé pour communiquer des informations et des données avec un dispositif électronique externe (20).

13. Taille-haie (10) selon la revendication 12, dans lequel les informations et données incluent au moins l'un parmi :
des commandes pour commander le fonctionnement de l'accessoire de surveillance de mouvement (100) ;
des commandes pour régler les paramètres de l'accessoire de surveillance de mouvement (100) ; et
des résultats de détermination obtenus par l'accessoire de surveillance de mouvement (100).
